# EUROPEAN PATENT APPLICATION

(11) **EP 2 395 203 A2**
(43) Date of publication of application: **14.12.2011**
(21) Application number: 11169005.3
(22) Date of filing: 07.06.2011
(51) Int. Cl.: F01D 21/04

(54) **Light weight vaneless compressor containment design**

(30) Priority: 14.06.2010 US 814866
(71) Applicant: Honeywell International, Inc., Morristown, New Jersey 07962-2245 (US)
(72) Inventor: Chen, Robert P., Morristown, NJ New Jersey 07962-2245 (US); Lin, Frank, Morristown, NJ New Jersey 07962-2245 (US); Elpern, David G., Morristown, NJ New Jersey 07962-2245 (US)
(74) Representative: Buckley, Guy Julian

(57) **Abstract**

A vaneless compressor containment design has an inner bolt circle with more than three fasteners situated in the vaneless space to cut up tri-hub pieces to smaller pieces prior to reaching an outer bolt circle and its associated flange. This containment design may allow a thinner radial wall thickness for the outermost flange as compared to the conventional design. The thinner radial wall thickness may reduce the weight of the compressor. This weight reduction may be achieved with little or no increase in the compressor space envelope.

## Description

### BACKGROUND OF THE INVENTION

The present invention relates to systems for containing a burst impeller or impeller fragments and, more particularly, to containment systems that include a vaneless diffuser.

Vaneless compressor containment design is usually heavier than the same design with diffuser vanes. The reason is due to the worst tri-hub burst fragments are not reduced much from the tri-hub pieces, if the original wheel is not designed as a frangible wheel with fuses to shed all bladings from the hub that remains with the shaft, by the diffuser vanes and related fasteners. The relatively large fragments reach the last containment wall may have sufficient kinetic energy to break out radially or tangentially, if the wall is not sized for piercing by the large pieces.

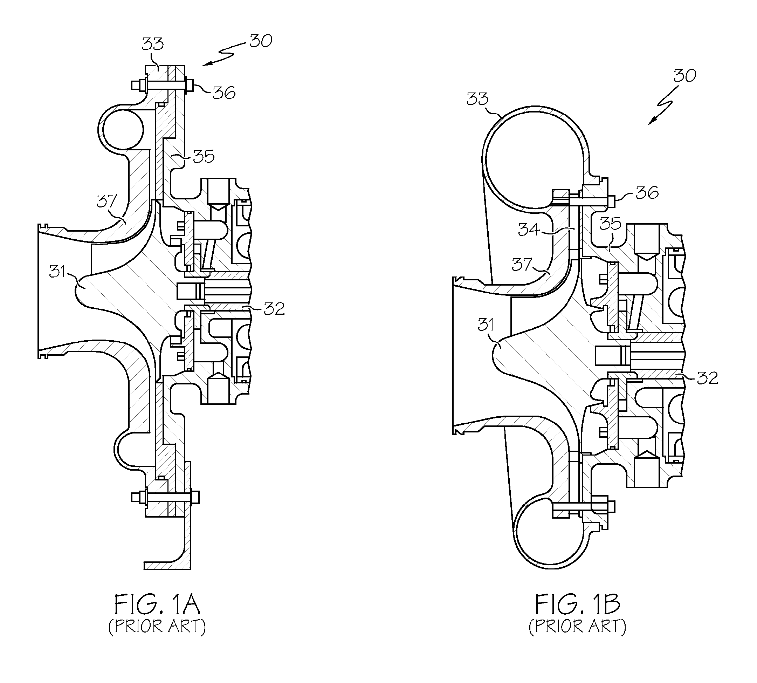

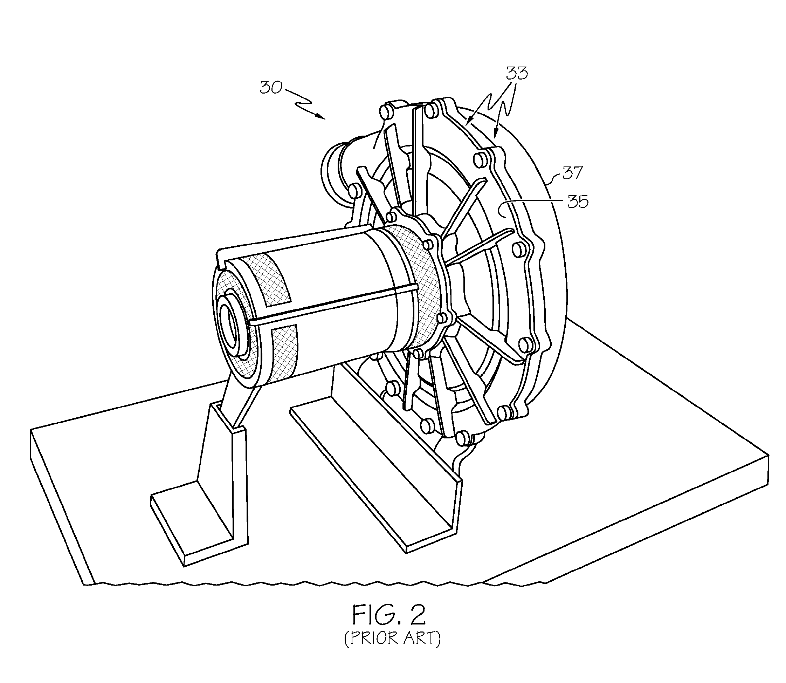

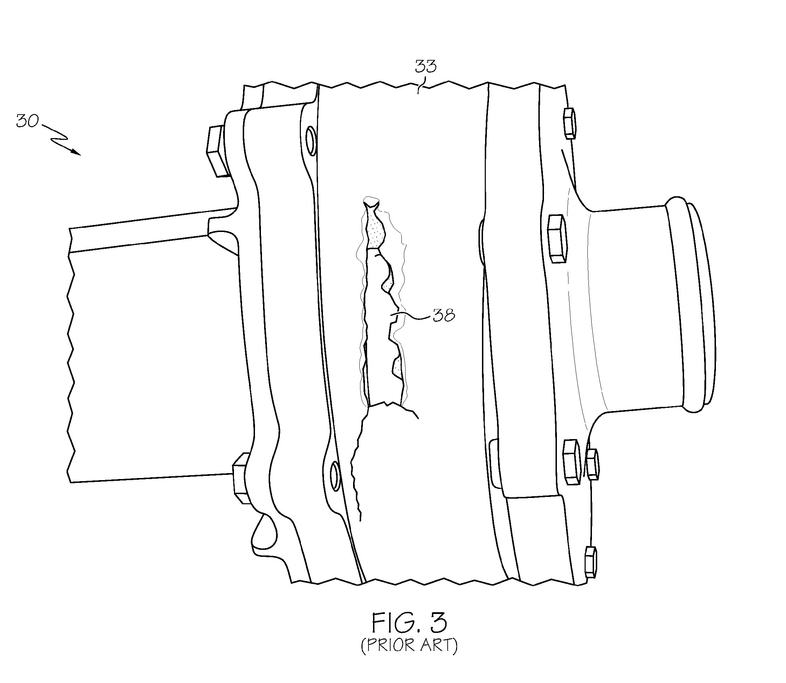

A prior art compressor 30, as depicted in Figures 1A and 1B, can include one or more impellers 31 in contact with a rotating shaft 32. A housing structure 35, which may comprise one or more members fastened together by housing fasteners 36, can enclose the impeller 31. A diffuser vane 34 is shown with a fastener 36 through the diffuser vane to tie the housing structure 35 and the shroud 37. The housing structure 35 can include a radially outer wall 33, or scroll flange, as depicted in Figures 1B and 2. In some circumstances, due to, for example, corrosion, defect or fatigue, the impeller 31 can fracture and burst from the shaft 32 during operation. In the event of an impeller fracture, the impeller 31 may break into two, three or more large fragments that are thrown radially outward from the shaft 32, through a diffuser vane 34 and fastener 36, and toward the radial outer wall 33, or scroll flange, due to centrifugal force. Fragments of the impeller 31 can penetrate the thin-walled portions of the radial outer wall 33. As depicted in Figure 3, the burst impeller fragments can form a hole 38 through the radial outer wall 33. The hole 38 may allow the impeller fragments to escape from the housing 35. To minimize or prevent damage to the aircraft, systems for containing the burst impeller fragments have been described in the prior art.

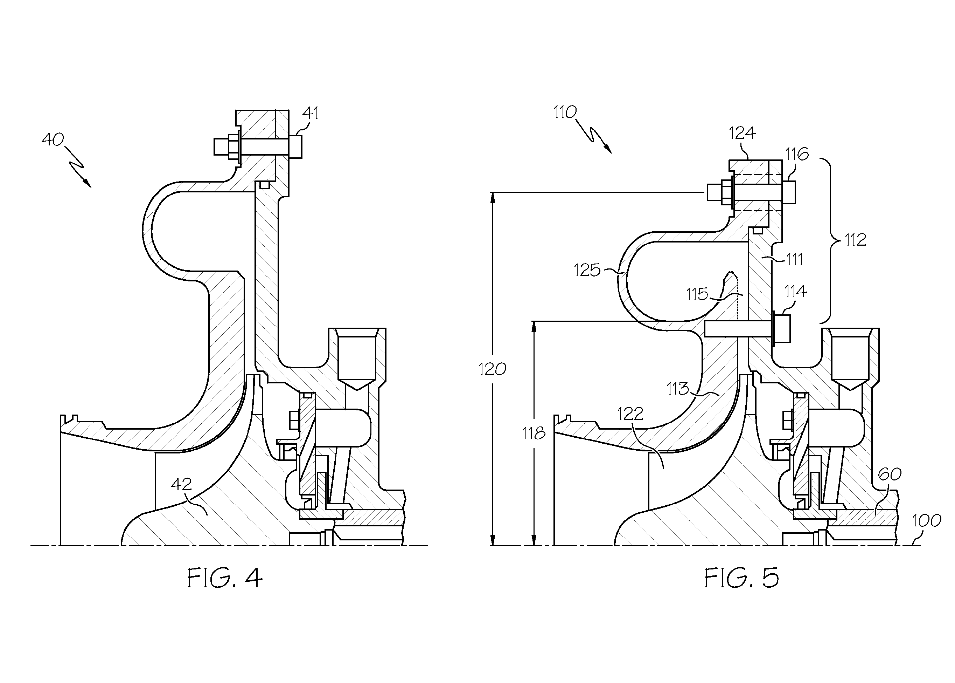

Another prior art compressor 40, as depicted in Figure 4, includes a plurality of fasteners, or passage obstructers 41 positioned about a single radius of the compressor 40, radially outward from an impeller 42.

U.S. Patent No. 6,695,574 discloses an energy absorber and deflection device for deflecting engine debris fragments from a core of a gas turbine engine. The device includes a deflection plate radially spaced from and adapted to cover any rotating component of the engine. The disclosed device may be used to contain fan blade fragments, rotor fragments, broken shaft fragments, compressor fragments, turbine blade fragments or turbine rotor fragments. Unfortunately, the deflection plate adds weight to and increases the space envelope of the engine.

Other fragment containment methods have included increasing the material strength of the shroud and/or increasing the thickness of the housing walls. Unfortunately, both approaches increase system weight also.

For some compressors, the inclusion of vaned diffusers can provide sufficient fragment containment. Unfortunately, vaned diffusers may not be suitable for all compressor designs.

As can be seen, there is a need for improved vaneless diffuser compressor containment systems. Additionally, containment systems are needed that do not adversely affect the weight and space envelope of the engine/machine.

### SUMMARY OF THE INVENTION

In one aspect of the present invention, a system for an impeller comprises a housing surrounding the impeller; a diffuser passage defined by the housing; and first and second sets of fasteners or passage obstructers having obstructing portions, the obstructing portions extending through the diffuser passage, wherein the first set of fasteners or passage obstructers is disposed circumferentially about a first radius; the second set of fasteners or passage obstructers is disposed circumferentially about a second radius; and the first radius is smaller than the second radius.

In another aspect of the present invention, a containment system for a compressor having a vaneless diffuser comprises first and second sets of fasteners or passage obstructers having obstructing portions, the obstructing portions extending through a diffuser passage, wherein the first set of fasteners or passage obstructers is disposed circumferentially about a first radius; the second set of fasteners or passage obstructers is disposed circumferentially about a second radius; and the first radius is smaller than the second radius.

In a further aspect of the present invention, a method of containing a burst impeller fragment comprises obstructing a path of the burst impeller fragment with first and second sets of fasteners or passage obstructers having obstructing portions, the first set of passage obstructers being disposed circumferentially about a first radius, the second set of fasteners or passage obstructers being disposed circumferentially about a second radius, and the first radius being smaller than the second radius; and absorbing at least a portion of the energy of the burst impeller fragments.

These and other features, aspects and advantages of the present invention will become better understood with reference to the following drawings, description and claims.

### BRIEF DESCRIPTION OF THE DRAWINGS

Figure 1A is cross-sectional view of a prior art compressor with a vaneless diffuser;

Figure 1B is a cross-sectional view of a prior art compressor with a diffuser vane;

Figure 2 is a perspective view of the prior art compressor of Figure 1 A;

Figure 3 is a perspective view of a hole through a scroll housing of a prior art compressor;

Figure 4 is a cross-sectional view of a vaneless diffuser prior art compressor;

Figure 5 is a cross-sectional view of a vaneless diffuser compressor having a containment system according to an embodiment of the present invention;

Figures 6A and 6B show a side-by-side comparison of the two vaneless diffuser compressor containment systems of Figures 4 and 5; and

Figure 7 is a flow chart describing a method according to an embodiment of the present invention.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features.

Broadly, embodiments of the present invention may provide a vaneless compressor containment design having an inner bolt circle with fasteners situated in the vaneless space to cut up tri-hub pieces to smaller pieces prior to reaching an outer bolt circle and its associated flange. The containment design of the present invention may allow a thinner radial wall thickness for the outermost flange as compared with conventional designs. The thinner radial wall thickness may reduce the weight of the compressor. This weight reduction may be achieved with little or no increase in the compressor space envelope.

Referring to Figure 5, a compressor 110 has a containment system 112 according to an exemplary embodiment. The containment system 112 may include a first set of passage obstructers or fasteners 114 and a second set of passage obstructers or fasteners 116. The first set of passage obstructers or fasteners 114 may be arranged about a first radius 118 about a shaft 60 of the compressor 122. The second set of passage obstructers, or fasteners 116 may be arranged about a second radius 120 about the shaft 60. The containment system 112 may be positioned radially outward from an impeller 122 and radially inward from a scroll housing containment flange 124. A housing 111, which may include the scroll housing containment flange 124, and the front shroud 113, may surround the impeller 122 and may define a diffuser passage 115. The first and second sets of passage obstructers 114, 116 may be in contact with the housing 111 and may extend axially through the diffuser passage 115. Axial and radial directions may be defined with reference to a center-line 100 through the shaft 60 of the compressor 122.

The passage obstructers 114, 116, as depicted in Figure 5, may comprise a standard fastener with a long shoulder and a threaded end. If one wishes to utilize more kinetic energy absorption capacity of the obstructers, a reduced shoulder diameter could be introduced to promote plastic bending of the obstructers however, the main concern of weight reduction of the compressor system may not improve much.

If one has in mind of multi-stage compressors, the increased obstructer length through more in-between housings can be used to provide more efficient obstructers by more plastic deformed in-between obstructers.

The obstructing portion of the fastener (i.e., the shoulder) may be designed to bend plastically by the impact of an impeller fragment and reduce its velocity or stop the outward movement. It might break up to smaller fragments if it were not stopped totally. The obstructing portion diameter may be large enough that impeller fragments may be contained and small enough that compressor performance may not be degraded.

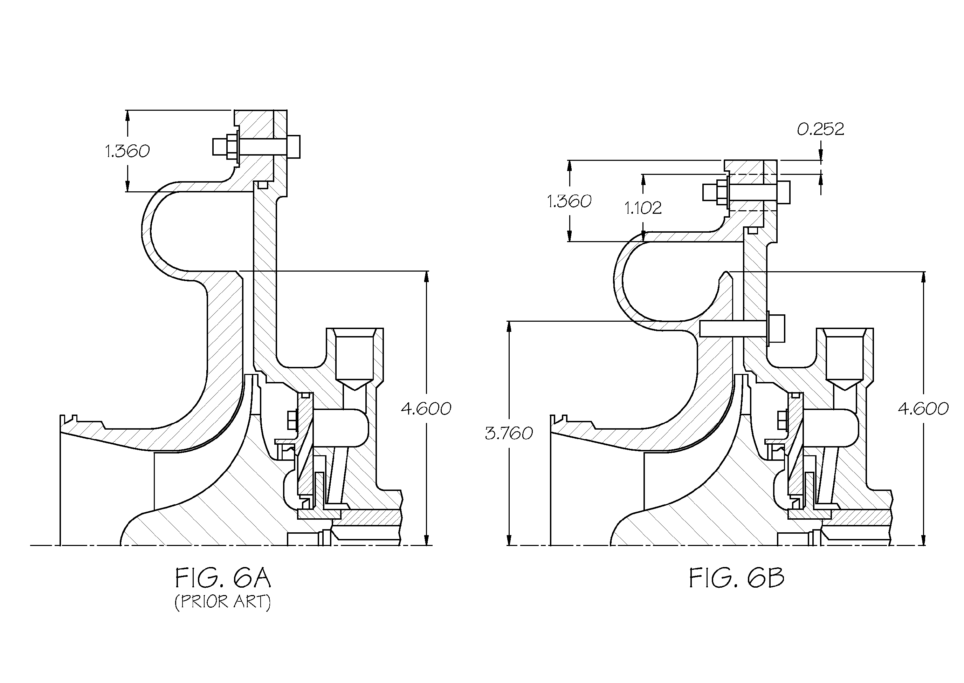

Still referring to Figure 5, the first and second set of passage obstructers 114, 116 may be located on the scroll flange 124 and scroll proper 125. The containment system 112 may be positioned radially outward from an impeller 122 and radially inward from a scroll flange 124..The containment system 112 may permit a lighter weight scroll layout as compared to the conventional design of Figure 4 in light of the fact that the number of fragments will be the same as number of obstructers (> 3). Figure 6 shows a realistic comparison between the designs of Figure 4 and 5.

The first set of passage obstructers 114 may include from about 5 to about 11 individual passage obstructers arranged circumferentially about the radius 118. In one embodiment, the first set of passage obstructers 114 may include seven (7) passage obstructers spaced equidistantly about a circumference defined by the radius 118. The angle between adjacent passage obstructers may be about 52 degrees.

The second set of passage obstructers 116 may include from about 5 to about 11 individual passage obstructers arranged circumferentially about the radius 120. In one embodiment, the second set of passage obstructers 116 may include seven (7) passage obstructers spaced equidistantly about a circumference defined by the radius 120. The angle between adjacent passage obstructers may be about 52 degrees. The second set of passage obstructers 116 may be disposed with offset from the first set of passage obstructers 114. In one embodiment the second set of seven passage obstructers 116 may be disposed about 26 degrees offset from the first set of seven passage obstructers 114. In this embodiment the second set of passage obstructers 116 is disposed centrally between adjacent ones of the first set of passage obstructers 114.

The use of two sets of passage obstructers (for example, first and second sets of passage obstructers 114, 116) may result in a significant weight reduction of the compressor with the built-in much larger than 3 number of fragments. In one exemplary embodiment, a weight reduction of about 2.7 pounds may be achieved. In another exemplary embodiment, a weight reduction of about 4.2 pounds may be achieved. These weight reductions may be due to the ability to use a decreased thickness in the scroll and/or the outer flange housing of the compressor. Further weight reductions may be achieved by increasing the number of bolts in the first set of passage obstructers 114.

The above containment systems 112 may move a first set of passage obstructers 114 into close proximity to the impeller 122. A computational fluid dynamics (CFD) model of exemplary embodiment designs has verified that this close proximity will not degrade the performance of the vaneless diffuser. Additional tests of the compressor design of Figure 5 show that (a) the design exceeded the required maximum corrected speed of 75% to 86%, (b) at a pressure ratio of 4.1, the corrected mass flow rate was 4.4 pounds mass per second (lbm/s), meeting the required 4.0 lbm/s mass flow rate at a pressure ratio of 4.0, (c) the peak aerodynamic efficiency at each speed tested exceeded 75%, meeting the 75% efficiency at maximum flow requirement, and (d) the peak aerodynamic efficiency was 83% at a corrected speed of 30,835 rpm and a correct mass flow of 3.8 lbm/s.

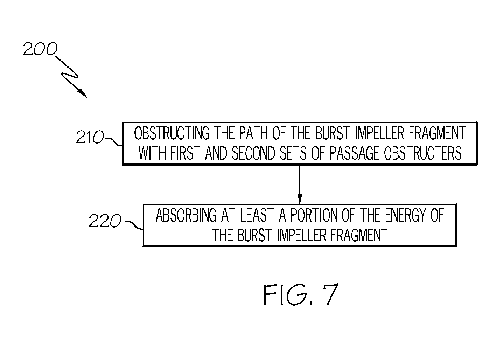

A method 200 of containing a burst impeller fragment that is traveling along a path in a radially outward direction is depicted in Figure 7. The method 200 may comprise a step 210 of obstructing the path of the burst impeller fragment with first and second sets of passage obstructers (e.g., first and second sets of passage obstructers 114, 116); and a step 220 of absorbing at least a portion of the energy of the burst impeller fragment.

The step 210 of obstructing the path of the burst impeller fragment may comprise obstructing the path of the burst impeller fragment such that the direction of the burst impeller fragment is altered by contact with the passage obstructers. The step 210 of obstructing the path of the burst impeller fragment may comprise obstructing the path of the burst impeller fragment such that the radial movement of the burst impeller fragment is halted by contact with the passage obstructers.

The step 220 of absorbing at least a portion of the energy of the burst impeller fragment may comprise absorbing at least a portion of the energy of the burst impeller fragment with the passage obstructers. The step 220 of absorbing at least a portion of the energy of the burst impeller fragment may comprise absorbing the energy of the burst impeller fragment such that the velocity of burst impeller fragment is reduced by contact with the passage obstructers. The step 220 of absorbing at least a portion of the energy of the burst impeller fragment may include bending an obstructing portion of the passage obstructer by impacting the obstructing portion with the burst impeller fragment.

It should be understood, of course, that the foregoing relates to exemplary embodiments of the invention and that modifications may be made without departing from the spirit and scope of the invention as set forth in the following claims.

## Claims

1. A system for an impeller (122) comprising:
a housing (111) surrounding the impeller;
a diffuser passage (115) defined by the housing; and
first and second sets of fasteners or passage obstructers (114) having shoulders or obstructing portions, the obstructing portions extending through the diffuser passage, wherein
the first set of passage obstructers is disposed circumferentially about a first radius (118);
the second set of passage obstructers (116) is disposed circumferentially about a second radius (120); and
the first radius is smaller than the second radius.

2. The system of claim 1, wherein the length of the obstructing portions are greater than the width of the diffuser passage.

3. The system of claim 1 or 2, wherein the fasteners or passage obstructers include a fastener portion having a fastener shoulder, and wherein the diameter of the obstructing portion is less than or equal to the diameter of the fastener shoulder.

4. The system of any of claims 1-3, wherein said diffuser passage comprises a vaneless diffuser.

5. The system of any of claims 1-4, wherein the passage obstructer includes a fastener portion, wherein the housing comprises a shroud, scroll proper, scroll flange, and scroll backing housing" wherein the scroll backing housing and shroud are tied by the first set of fasteners, and the scroll backing housing and the scroll flange are tied by the second set of fasteners.

6. The system of any of claims 1-5, wherein the fasteners or passage obstructers are in contact with the housing and extend axially though the diffuser passage.

7. The system of any of claims 1-6, wherein each of the first set of fasteners or passage obstructers is arranged equidistantly between adjacent ones of the second set of fasteners or passage obstructers.

8. The system of any of claims 1-7, wherein:
the first set of passage obstructers are disposed between a scroll and the impeller; and
the second set of passage obstructers are disposed between the scroll and a housing containment structure.

9. The system of any of claims 1-8, wherein the first and second passage obstructers are disposed between a housing containment structure and the impeller.
